# EUROPÄISCHE PATENTSCHRIFT

(11) **EP 1 113 949 B1**
(45) Veröffentlichungstag und Bekanntmachung des Hinweises auf die Patenterteilung: **01.10.2003**
(21) Anmeldenummer: 99969068.8
(22) Anmeldetag: 10.09.1999
(51) Int. Cl.: B60R 21/20

(54) **Airbagmodul mit mehrstufigem Gasgenerator**
Airbag Module with a Multistage Gas Generator
Module sac gonflable doté d'un générateur de gaz à plusieurs étapes

(30) Priorität: 15.09.1998 DE 19843214
(43) Veröffentlichungstag der Anmeldung: 11.07.2001
(73) Patentinhaber: Takata-Petri AG, 63743 Aschaffenburg (DE)
(72) Erfinder: MALCZYK, Axel, D-12163 Berlin (DE); OSE, Falk, D-13189 Berlin (DE); SAKAGUCHI, Takashi, D-63776 Mömbris (DE)
(74) Vertreter: Baumgärtel, Gunnar, Dr.
(86) Internationale Anmeldenummer: DE9902957
(87) Internationale Veröffentlichungsnummer: WO00015468

(56) Entgegenhaltungen:
- DE-A- 19 756 977
- DE-U- 29 616 682
- US-A- 5 460 402
- "TETHERED DEPLOYMENT DOOR" RESEARCH DISCLOSURE,GB,INDUSTRIAL OPPORTUNITIES LTD. HAVANT, Nr. 386, 1. Juni 1996 (1996-06-01), Seiten 349-351, XP000596164 ISSN: 0374-4353
- PATENT ABSTRACTS OF JAPAN vol. 1995, no. 06, 31. Juli 1995 (1995-07-31) & JP 07 069149 A (TAKATA KK), 14. März 1995 (1995-03-14)

## Beschreibung

Die Erfindung betrifft ein Airbagmodul mit mehrstufigem Gasgenerator nach dem Oberbegriff des Anspruchs 1.

Bei der Verwendung eines mehrstufigen Gasgenerators in einem Airbagmodul werden in Abhängigkeit von bestimmten Faktoren, wie z.B. Unfallschwere, Sitzposition und Gewicht des Insassen die Stufen einzeln bzw. aufeinanderfolgend gezündet. Nach Zündung einer ersten Stufe würde ein Gassack, wie er für einstufige Gasgeneratoren in unterschiedlichen Ausführungen verwendet wird, voll entfaltet werden, wobei allerdings der Gassack wegen der in dieser Stufe vom Gasgenerator erzeugten geringen Gasmenge mit einem geringen Innendruck beaufschlagt wird. Bei einem Aufprall des Insassen auf diesen Gassack besteht deshalb die Gefahr, daß er nicht ausreichend zurückgehalten wird und sich an Fahrzeugteilen, die hinter dem entfalteten Gassack liegen, verletzt.

Zur Vermeidung dieses Nachteils ist es bekannt, den Gassack in Abhängigkeit von der gezündeten Stufe des Gasgenerators auf unterschiedliche Größen zu entfalten, so daß der Innendruck des Gassacks bereits nach der Zündung der ersten Zündstufe ausreichend groß ist. So wird der Gassack nach Zündung der ersten Stufe nur in geringem Maße aber doch bis zu einer solchen Größe entfaltet, daß er einen "oop"-Insassen (out of position) beim Aufprall schützen kann.

Zur Erzielung der unterschiedlichen Entfaltung sind verschiedene Lösungen bekannt. So ist aus der DE 298 04 239 U1 ein Gassack für ein Fahrzeuginsassen-Rückhaltesystem bekannt, bei dem gefaltete Bereiche der Gassackwandung mittels Reiβnähten abgenäht sind. Diese Reißnähte reißen bei unterschiedlichen Innendrücken im Gassack, so daß das Volumen des Gassacks bei steigendem Innendruck stufenweise zunimmt.

Weiterhin ist aus der DE 298 05 217 U1 ein Fahrzeuginsassen-Rückhaltesystem bekannt, bei dem mindestens ein Fangband im Inneren des Gassacks vorgesehen ist, das die Gestalt des Gassacks im entfalteten Zustand beeinflußt. Hierfür ist eine Wickelvorrichtung vorgesehen, auf der das Fangband im Ruhezustand mindest teilweise auf genommen ist. Die Wickelvorrichtung weist einen Bremsmechanismus auf, der weg- oder zeitgesteuert nach einer bestimmtem Entfaltung des Gassacks eine kontrollierte Abbremsung des Fangbandes und damit der Wandung des Gassacks bis zum Stillstand herbeiführen kann.

Der Nachteil dieser bekannten Maßnahmen besteht darin, daß der Gassack gegenüber herkömmlichen Gassäcken aufwendiger und dadurch teurer wird.

Aus der gattungsbildenden US-A 5,460,402 ist ein Airbagmodul mit einem einstufigen Gasgenerator bekannt, bei dem eine Gassackabdeckung über mehrere Klebestellen seitlich an einem Gehäuserand befestigt ist. Bei einem Entfalten des Gassacks wird zunächst ein seitlicher Klebebereich der Gassackabdeckung von der zugehörigen Klebefläche getrennt, so daß die Gassackabdeckung einseitig aufklappt. Mit zunehmender Gassackentfaltung werden auch die weiteren Klebeflächen der Gassackabdeckung aufgetrennt. Durch diese Ausgestaltung erfährt die Gassackabdeckung eine vorbestimmte Öffnungscharakteristik, die insbesondere geeignet ist, eine bestimmte Richtung der Gassackentfaltung vorzugeben und die Geschwindigkeit der Gassackentfaltung zu reduzieren. Ein mehrstufiger Gasgenerator ist nicht beschrieben.

Der Erfindung liegt die Aufgabe zugrunde, eine unterschiedliche Entfaltung des Gassacks in Abhängigkeit von der jeweils gezündeten Stufe des Gasgenerators mit geringerem Aufwand zu erzielen.

Diese Aufgabe wird erfindungsgemäß durch ein Airbagmodul mit den Merkmalen des Anspruchs 1 gelöst.

Danach ist erfindungsgemäß zum einen vorgesehen, daß der Gassack im Ruhezustand in gefalteter Lage neben dem Gassack oder einem Diffusor des Gassacks liegt und sich über diesen nur eine Gassacklage erstreckt, so daß nach Zündung des Gasgenerators der Gassack durch die aus diesem austretenden Gase nur sukzessive aus dem Gehäuse des Airbagmoduls gezogen wird. Zum anderen ist die Gassackabdeckung und/oder ein an dem gefalteten Gassack angreifendes Teil derart ausgebildet, daß nach öffnung der Gassackabdeckung ab einem vorbestimmten Zeitpunkt zunehmend höhere Kräfte für die Entfaltung des Gassacks erforderlich sind und dabei die außenliegenden Teile des Gassacks erst bei höheren Kräften entfaltet werden.

Es wurde festgestellt, daß durch die erfindungsgemäße Lösung der gleiche vorteilhafte Effekt der unterschiedlichen Entfaltung wie bei der Verwendung von Fangbändern und Reißnähten erzielt werden kann. Dabei sind am Gassack gegenüber einem Gassack für einen einstufigen Gasgenerator keine Änderungen erforderlich. Eine Faltung des Gassackes, bei der dieser nach der Zündung des Gasgenerators durch die austretenden Gase sukzessive aus den Gehäuse herausgezogen wird statt komplett aus dem Gehäuse gedrückt zu werden, ist an sich bekannt und erfordert keimen zusätzlichen Aufwand. Die notwendige Änderung der Gassackabdeckung bzw. ein zusätzlich an den Gassack angreifendes Teil verursacht nur einen geringen zusätzlichen Aufwand.

Die Gassackabdeckung ist erfindungsgemäß so ausgebildet, daß sie (gemäß Anspruch 2) von einer vorbestimmten Stelle aus zunehmend schwerer aufreißbar ist. Diese vorbestimmte Stelle kann unmittelbar an der Reißnaht der Gassackabdeckung liegen, kann aber auch in einem bestimmten Abstand von dieser vorgesehen sein. Bei der Entfaltung des Gassacks nach Zündung der ersten Stufe des Gasgenerators wird wegen des geringeren Druckes im Gassack die Gassackabdeckung noch nicht vollständig aufgerissen. Es konnte festgestellt werden, daß sich der Gassack dadurch nur teilweise entfaltet und daß der Innendruck des entfalteten Abschnitts des Gassacks aber ausreichend ist, um einen Insassen beim Aufprall auf den Gassack ausreichend zu schützen.

Die zunehmend schwerere Aufreißbarkeit der Gassackabdeckung kann auf unterschiedliche Weise erreicht werden. So ist in einer ersten Ausführungsform vorgesehen, daß sich die Dicke der Abdeckung ab einer vorbestimmten Stelle mit zunehmendem Abstand von der Reißnaht zumindest abschnittsweise vergrößert. Bei einer speziellen Ausgestaltung dieser Ausführungsform vergrößert sich die Dicke der Gassackabdeckung von der Aufreißnaht ausgehend kontinuierlich.

In einer weiteren Ausführungsform sind radial verlaufende Einschnitte als Reißlinien vorgesehen, die von der Mitte ausgehend eine abnehmende Tiefe aufweisen.

Bei einer dritten Ausführungsform sind von einem mittleren Bereich ausgehend zumindest annähernd parallel verlaufende Einschnitte vorgesehen, die vom mittleren Bereich ausgehend eine zunehmend geringere Tiefe aufweisen.

Bei einer vierten Ausführungsform ist an der Gassackabdeckung ab einer vorbestimmten Stelle mindestens eine Versteifungsrippe vorgesehen, die mit zunehmendem Abstand von einer Aufreißnaht zumindest abschnittsweise eine zunehmende Höhe aufweist. In einer speziellen Ausgestaltung weist die Versteifungsrippe eine sich kontinuierlich vergrößernde Höhe auf.

In einer weiteren Ausführungsform weist die Gassackabdeckung mindestens eine Verstärkung auf, die in eine Falte des Gassacks eingreift. Diese Verstärkung stellt ein zusätzliches Hindernis dar, um die Entfaltung eines Teils des Gassacks bei Zündung z.B. der ersten Stufe des Gassacks zu verhindern. Vorzugsweise ist mindestens eine umlaufende Verstärkung vorgesehen, die in mindestens eine umlaufende Falte eingreift.

Eine andere Ausgestaltung der Gassackabdeckung ist dadurch gekennzeichnet, daß diese einen Abschnitt aufweist, der auch nach Öffnung der Gassackabdeckung durch den sich entfaltenden Gassack einen Teilbereich des Gehäuses für die Unterbringung des gefalteten Gassacks überdeckt.

In einer weiteren Ausführungsform ist der gefaltete Gassack zumindest teilweise von einer Folie umgeben, die mit zunehmendem Abstand von einer Aufreißnaht schwerer aufreißbar ist. Mit einer solchen Folie wird der gleiche Effekt erzielt wie mit der erfindungsgemäß ausgebildeten Abdeckung bzw. wird deren Wirkung unterstützt.

Ein Gassack, der so gefaltet ist, daß er nach der Zündung des Gasgenerators durch die aus diesem austretenden Gase sukzessive aus dem Gehäuse des Airbagmoduls gezogen wird, liegt in einer Ausführungsform in gefalteter Lage neben dem Gasgenerator oder Diffusor und über diesen erstreckt sich nur eine Gassacklage.

Die Erfindung soll in Ausführungsbeispielen anhand von Zeichnungen erläutert werden. Es zeigen:
- Fig. 1: einen Schnitt durch ein Airbagmodul mit einer ersten Ausführungsform einer Gassackabdeckung;
- Fig. 1a: eine verkleinerte Ansicht der Unterseite der Gassackabdeckung nach Fig. 1 in einer ersten Ausgestaltung;
- Fig. 1b: eine verkleinerte Ansicht der Unterseite der Gassackabdeckung nach Fig. 1 in einer zweiten Ausgestaltung;
- Fig. 2: das Airbagmodul nach Fig. 1 mit teilsweise entfaltetem Gassack nach der Zündung der ersten Stufe eines mehrstufigen Gasgenerators;
- Fig. 3: das Airbagmodul nach Fig. 1 mit voll entfaltetem Gassack nach Zündung der letzten Stufe des mehrstufigen Gasgenerators;
- Fig. 4: einen Schnitt durch eine zweite Ausführungsform eines Airbagmoduls mit gegenüber der ersten Ausführungsform veränderter Gassackabdeckung;
- Fig. 5: einen Schnitt durch eine dritte Ausführungsform der Gassackabdeckung;
- Fig. 6: eine Draufsicht auf eine vierte Ausführungsform der Gassackabdeckung;
- Fig. 7: einen Schnitt durch eine fünfte Ausführungsform eines Airbagmoduls mit veränderter Gassackabdeckung;
- Fig. 8: einen Schnitt durch ein Airbagmodul, bei dem der Gassack mit einer Folie bedeckt ist.

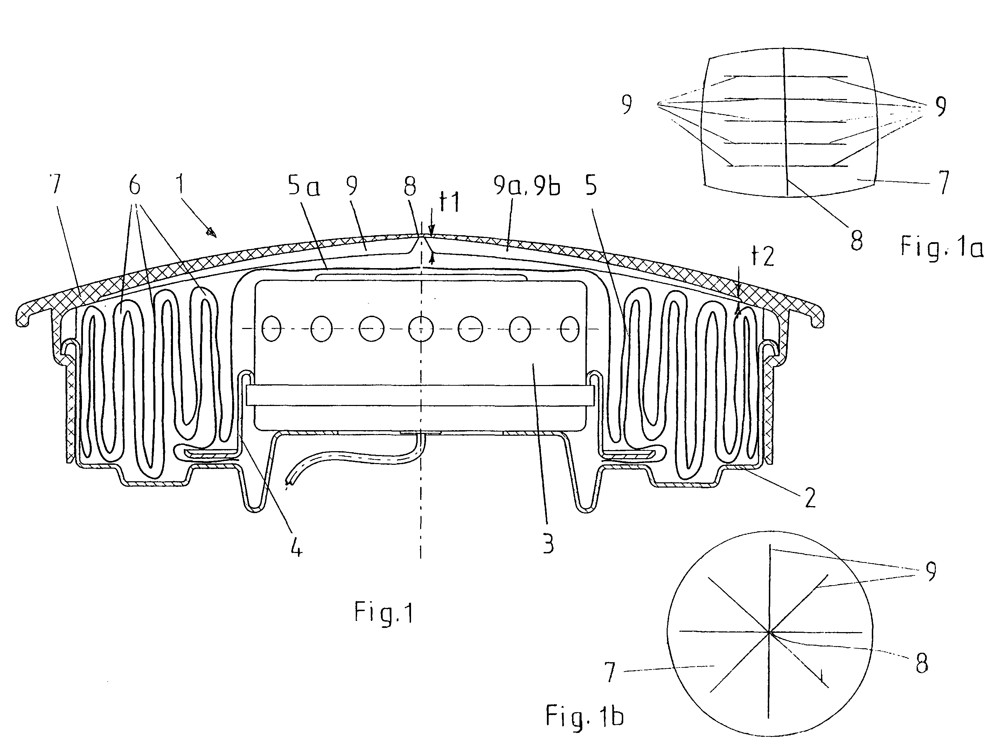

Bei dem in der Fig. 1 dargestellten Airbagmodul 1 ist in einem Gehäuse 2 ein mehrstufiger Gasgenerator 3 angeordnet. Am Gehäuse 2 ist mittels eines Haltebleches 4 ein Gassack 5 befestigt. Der Gassack 5 ist ringförmig so gefaltet, daß die Falten 6 senkrecht verlaufen und daß sich diese rings um den Gasgenerator 3 erstrecken. Über dem Gasgenerator 3 liegt dabei lediglich eine Lage 5a des Gassacks 5. Durch diese an sich bekannte Faltungsart wird erreicht, daß der Gassack 5 nach Zündung des Gasgenerators 3 durch die aus diesem austretenden Gase sukzessive aus dem Gehäuse 2 herausgezogen wird, wobei in der ersten Entfaltungsphase zunächst eine Gassackabdeckung 7 von ihrem mittleren Bereich 8 her aufgerissen wird. Bei dieser Art der Entfaltung wird also nicht das gesamte Gassackpaket durch die Gase aus dem Gehäuse herausgeschoben und anschließend entfaltet, sondern der Gassack wird Falte für Falte aus dem Gehäuse 2 herausgezogen.

Die Gassackabdeckung 7, die eine konstante Dicke aufweist, ist mit Einschnitten 9 versehen, deren Tiefe vom mittleren Bereich 8 zum Rand hin von t1 auf t2 abnimmt, so daß gemäß einer ersten Ausgestaltung nach Fig. 1a von einer Aufreißnaht im mittleren Bereich 8 ausgehend zunehmend höhere Kräfte zum weiteren Aufreißen der Gassackabdeckung 7 erforderlich sind.

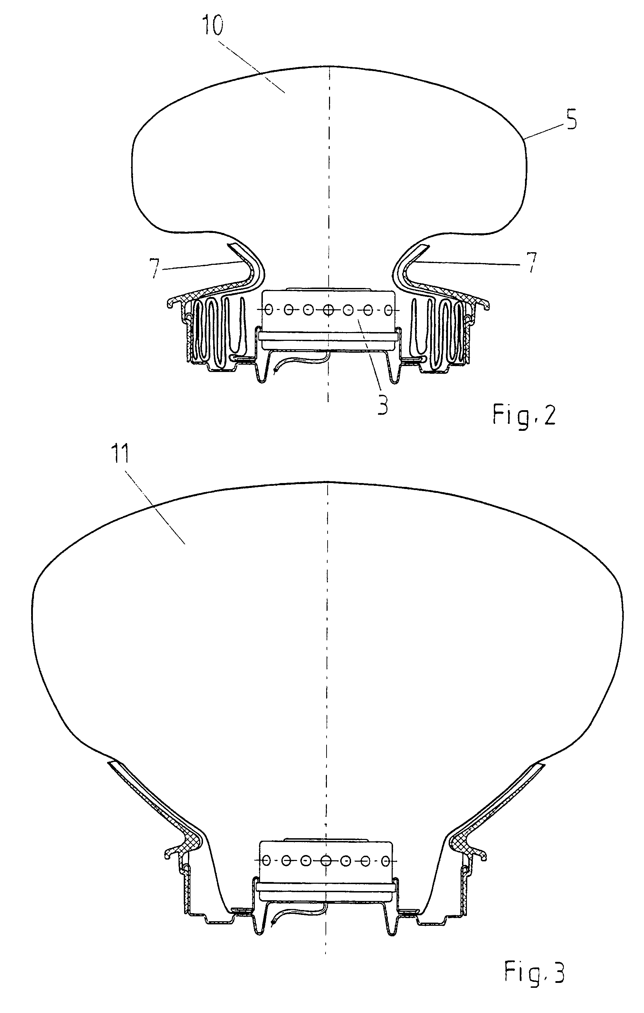

In der Fig. 2 ist das Airbagmodul in der ersten Phase der Entfaltung des Gassackes 5 dargestellt, z. B. nach Zündung einer ersten Stufe des mehrstufigen Gasgenerators 3. Die Gassackabdeckung 7 ist in dieser Phase durch den mit einer Teilgasmenge beaufschlagten Gassack 5 nur teilweise geöffnet worden. Der Gassack 5 ist nur teilweise entfaltet und umschließt gegenüber seiner vollen Entfaltung ein kleineres Volumen 10. Dadurch entspricht der Innendruck im Gassack 5 annähernd dem des voll entfalteten Gassackes bei Beaufschlagung mit der Gesamtladung des Gasgenerators, so daß ein Insasse beim Aufprall auf den Gassack ausreichend geschützt ist. Die Gefahr des Durchschlagens und damit des Aufpralls auf eine feste Struktur des Kraftfahrzeuges besteht nicht.

Nach Zündung der letzten Stufe des Gasgenerators 3 kann der Gassack die Gassackabdeckung 7 vollständig aufreißen und der Gassack 5 entfaltet sich zu seiner vollen Größe und umschließt das in Fig. 3 dargestellte große Volumen 11.

Der gleiche Effekt wird mit der Ausgestaltung nach Fig. 1b erzielt, indem die Einschnitte 9 als radial verlaufende Reißlinien ausgebildet sind, für deren Aufreißen vom mittleren Bereich 8 ausgehend wegen der abnehmenden Tiefe zunehmend größere Kräfte erforderlich sind.

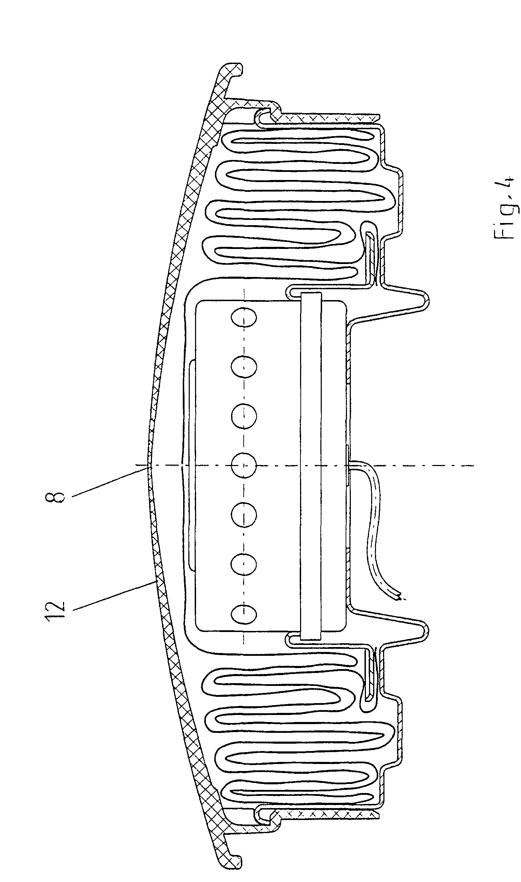

Das Ausführungsbeispiel der Fig. 4 weicht von dem der Fig. 1 dadurch ab, daß eine Gassackabdeckung 12 vorgesehen ist, die vom mittleren Bereich 8 ausgehend eine zunehmend größere Dicke aufweist, so daß die Gassackabdeckung 12 im mittleren Bereich 8 die geringste und nach außen hin eine zunehmend größere Biegesteifigkeit aufweist.

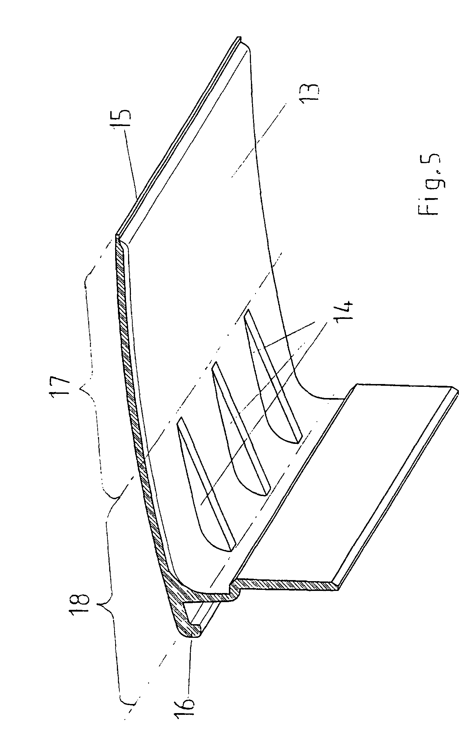

Bei der in Fig. 5 dargestellten Ausführungsform ist eine Gassackabdeckung 13, die eine konstante Dicke aufweist, mit Versteifungsrippen 14 versehen. Diese erstrecken sich ab einem vorbestimmten Abstand von einer mittleren Aufreißnaht 15 zum Rand der Gassackabdeckung 13, wobei sie zum Rand der Kappe hin eine zunehmend größere Dicke aufweisen. Dadurch weist die Gassackabdeckung einen Bereich 17 auf, der leicht zu öffnen ist und einen Bereich 18, der zum Rand 16 hin zunehmend schwerer zu öffnen ist.

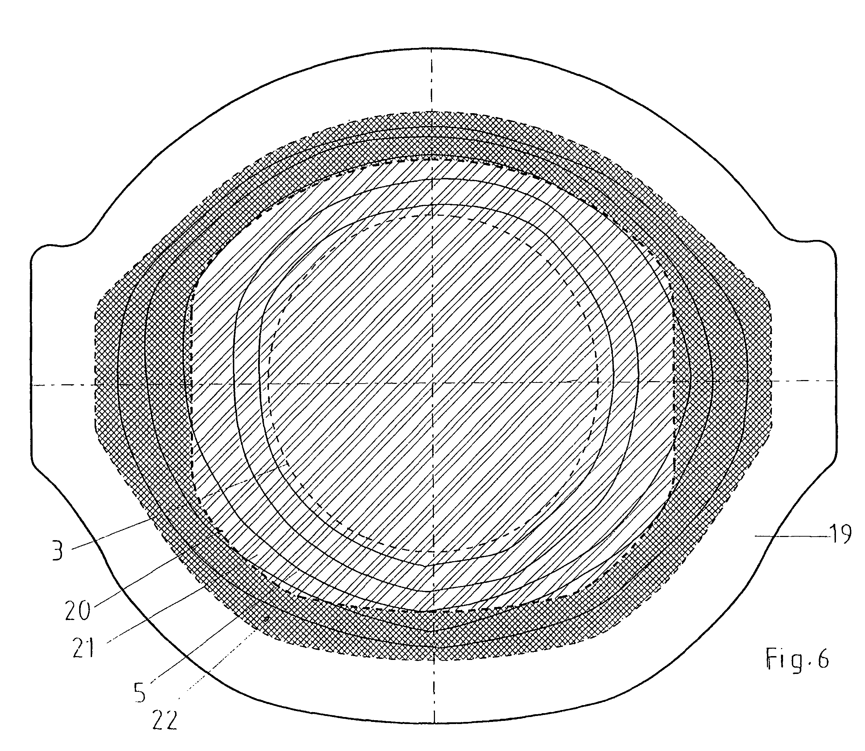

In der Fig. 6 ist eine Gassackabdeckung 19 dargestellt, bei der ein maximaler Öffnungsquerschnitt vorgesehen ist, welcher der durch die Linie 20 begrenzten und durch eine Schraffierung gekennzeichneten Fläche 21 entspricht. Der um den Gasgenerator 3 herum angeordnete gefaltete Gassack 5 erstreckt sich radial über die Linie 20 hinaus. Dadurch liegt ein Teil des gefalteten Gassacks unter einem Abschnitt 22 der Gassackabdeckung, der auch nach Zündung der letzten Stufe des Gasgenerators nicht entfernt wird und in der Figur durch eine gekreuzte Schraffur hervorgehoben ist. Nach Zündung der ersten Stufe des Gasgenerators 3 kann sich der im Bereich der Fläche 21 liegende Teil des Gassacks leicht entfalten, während der unter dem Abschnitt 22 liegende Teil des Gassacks weitestgehend in seiner gefalteten Lage verbleibt. Dadurch weist der in dieser Phase entfaltete Gassack das in der Fig. 2 dargestellte kleinerer Volumen mit den weiter oben beschriebenen Vorteilen auf. Erst nach Zündung der letzten Stufe des Gasgenerators wird auch der unter dem Abschnitt 22 der Gassackabdeckung liegende Teil des Gasgenerators entfaltet und der Gassack erreicht die in der Fig. 3 dargestellte Endgröße.

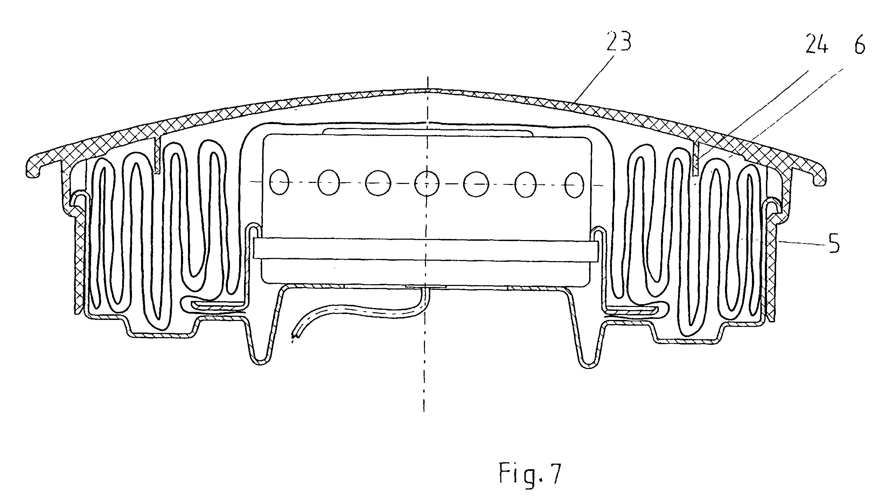

Bei der Ausführungsform der Fig. 7 ist an einer Gassackabdeckung 23 eine umlaufende Verstärkung 24 angeordnet, die in eine ebenfalls umlaufende Falte 6 des Gassacks eingreift. Die Verstärkung 24 stellt ein zusätzliches Mittel dar, um die Entfaltung der außen liegenden Falten nach Zündung der ersten Stufe des Gasgenerators zu verhindern.

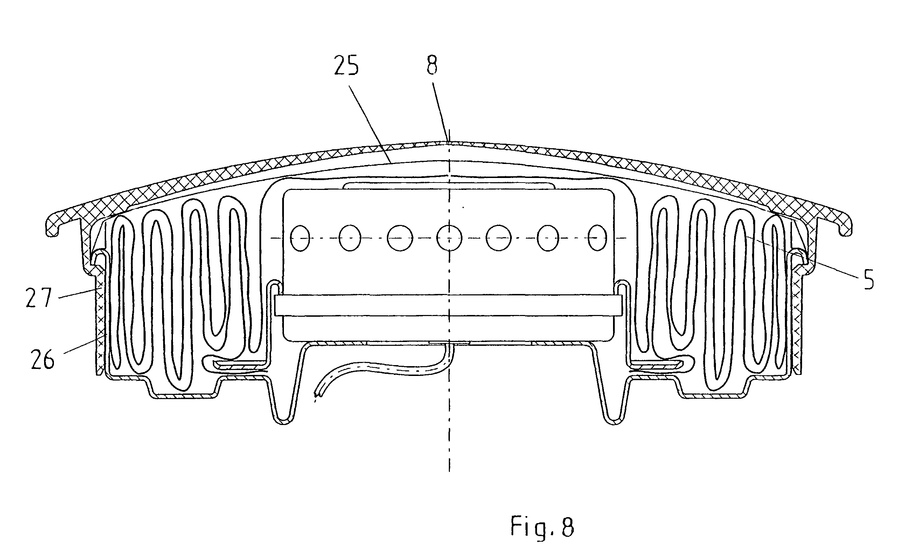

Schließlich ist in der Fig. 8 noch eine Ausführungsform dargestellt, bei der als zusätzliches Mittel für die Verhinderung einer völligen Entfaltung des Gassacks nach Zündung der ersten Stufe des Gasgenerators über dem gefalteten Gassack 5 eine Folie 25 vorgesehen ist, die zwischen einer Seitenwand 26 des Gehäuses 2 des Airbagmoduls und einer Seitenwand 27 der Gassackabdeckung eingespannt ist. Die Folie 25 ist so ausgebildet, daß sie vom mittleren Bereich 8 des Airbagmoduls zur Seite hin zunehmend schwerer aufreißbar ist. Dadurch wird ein ähnlicher Effekt wie bei den vorhergehenden Ausführungsformen erzielt.

## Patentansprüche

1. Airbagmodul mit einem Gasgenerator (3) mit Gassack (5) und mit einer über dem Gassack (5) angeordneten und durch diesen bei dessen Entfaltung zu öffnenden Gassackabdeckung (7, 12, 13, 19, 23), wobei nach Öffnung der Gassackabdeckung ab einem vorbestimmten Zeitpunkt zunehmend höhere Kräfte für die Entfaltung des Gassacks (5) erforderlich sind,
**dadurch gekennzeichnet,**
**daß** der Gasgenerator (3) mehrstufig ausgebildet ist, der Gassack (5) im Ruhezustand in gefalteter Lage neben dem Gasgenerator (3) oder einem Diffusor des Gasgenerators liegt und sich über diesen nur eine Gassacklage (5a) erstreckt, so daß der Gassack (5) nach Zündung des Gasgenerators durch die aus diesem austretenden Gase sukzessive aus dem Gehäuse (2) des Airbagmoduls (1) gezogen wird, und die Gassackabdeckung und/oder ein an den gefalteten Gassack (5) angreifendes Teil (24) derart ausgebildet sind, daß nach Öffnung der Gassackabdeckung (7, 12, 13, 19, 23) ab einem vorbestimmten Zeitpunkt zunehmend höhere Kräfte für die Entfaltung des Gassacks (5) erforderlich sind und dabei die außenliegenden Teile des Gassacks (5) erst bei höherem Kräften entfaltet werden.

2. Airbagmodul nach Anspruch 1, **dadurch gekennzeichnet, daß** die Gassackabdeckung (7, 12, 13, 23) so ausgebildet ist, daß sie von einer vorbestimmten Stelle aus zunehmend schwerer aufreißbar ist.

3. Airbagmodul nach Anspruch 1 oder 2, **dadurch gekennzeichnet, daß** sich die Dicke der Gassackabdeckung (12) ab einer vorbestimmten Stelle mit zunehmendem Abstand von einer Aufreißnaht zumindest abschnittsweise vergrößert.

4. Airbagmodul nach mindestens einem der vorhergehenden Ansprüche, **dadurch gekennzeichnet, daß** sich die Dicke der Gassackabdeckung (12) von einer Aufreißnaht ausgehend kontinuierlich vergrößert.

5. Airbagmodul nach mindestens einem der vorhergehenden Ansprüche, **dadurch gekennzeichnet, daß** radial verlaufende Einschnitte (9) als Reißlinien vorgesehen sind, die von der Mitte (8) ausgehend eine abnehmende Tiefe aufweisen.

6. Airbagmodul nach Anspruch 1 oder 2, **dadurch gekennzeichnet, daß** von einem mittleren Bereich (8) ausgehend zumindest annähernd parallel verlaufende Einschnitte (9) vorgesehen sind, die vom mittleren Bereich (8) ausgehend eine zunehmend geringere Tiefe aufweisen.

7. Airbagmodul nach mindestens einem der vorhergehenden Ansprüche, **dadurch gekennzeichnet, daß** die Gassackabdeckung (13) ab einer vorbestimmten Stelle mit mindestens einer Versteifungsrippe (14) versehen ist, die mit zunehmendem Abstand von einer Aufreißnaht (15) zumindest abschnittsweise eine zunehmende Höhe aufweist.

8. Airbagmodul nach Anspruch 7, **dadurch gekennzeichnet, daß** die Versteifungsrippe (14) eine sich kontinuierlich vergrößernde Höhe aufweist.

9. Airbagmodul nach mindestens einem der vorhergehenden Ansprüche, **dadurch gekennzeichnet, daß** die Gassackabdeckung (23) mindestens eine Verstärkung (24) aufweist, die in eine Falte (6) des Gassacks (5) eingreift.

10. Airbagmodul nach Anspruch 9, **dadurch gekennzeichnet, daß** mindestens eine umlaufende Verstärkung (24) vorgesehen ist, die in mindestens eine umlaufende Falte (6) eingreift.

11. Airbagmodul nach mindestens einem der vorhergehenden Ansprüche, **dadurch gekennzeichnet, daß** die Gassackabdeckung (19) einen Abschnitt (22) aufweist, der auch nach Öffnung der Gassackabdeckung (19) durch den sich entfaltenden Gassack einen Teilbereich des Gehäuses für die Unterbringung des gefalteten Gassacks (5) überdeckt.

12. Airbagmodul nach mindestens einem der vorhergehenden Ansprüche, **dadurch gekennzeichnet, daß** der gefaltete Gassack (5) zumindest teilweise von einer Folie (25) umgeben ist, die mit zunehmendem Abstand von einer Aufreißnaht schwerer aufreißbar ist.

## Claims

1. Airbag module with a gas generator (3) having a gas bag (5) and with a gas bag cover (7, 12, 13, 19, 23) arranged above the gas bag (5) and to be opened by the latter during its deployment, increasingly higher forces for the deployment of the gas bag (5) being necessary from a predetermined point in time after the opening of the gas bag cover, **characterized in that** the gas generator (3) is of multi-stage design, in the state of rest the gas bag (5) lies, in the folded position, next to the gas generator (3) or a diffuser of the gas generator and only one gas bag layer (5a) extends over the latter, so that, after the ignition of the gas generator, the gas bag (5) is drawn, by the gases emerging from the said gas generator, successively out of the housing (2) of the airbag module (1), and the gas bag cover and/or a part (24) engaging on the folded gas bag (5) are designed in such a way that increasingly higher forces for the deployment of the gas bag (5) are necessary from a predetermined point in time after the opening of the gas bag cover (7, 12, 13, 19, 23) and in this case the outer parts of the gas bag (5) are deployed only under higher forces.

2. Airbag module according to Claim 1, **characterized in that** the gas bag cover (7, 12, 13, 23) is designed in such a way that it can be torn open from a predetermined point with increasing difficulty.

3. Airbag module according to Claim 1 or 2, **characterized in that** the thickness of the gas bag cover (12) increases at least partially from a predetermined point with an increasing distance from a tear-open seam.

4. Airbag module according to at least one of the preceding claims, **characterized in that** the thickness of the gas bag cover (12) increases continuously from a tear-open seam.

5. Airbag module according to at least one of the preceding claims, **characterized in that** radially running incisions (9) are provided as tearing lines which, starting from the middle (8), have a decreasing depth.

6. Airbag module according to Claim 1 or 2, **characterized in that**, starting from a middle region (8), incisions (9) running at least approximately in parallel are provided, which, starting from the middle region (8), have an increasingly smaller depth.

7. Airbag module according to at least one of the preceding claims, **characterized in that** the gas bag cover (13) is provided from a predetermined point with at least one stiffening rib (14) which has at least partially an increasing height with an increasing distance from a tear-open seam (15).

8. Airbag module according to Claim 7, **characterized in that** the stiffening rib (14) has a continuously increasing height.

9. Airbag module according to at least one of the preceding claims, **characterized in that** the gas bag cover (23) has at least one reinforcement (24) which engages into a fold (6) of the gas bag (5).

10. Airbag module according to Claim 9, **characterized in that** at least one continuous reinforcement (24) is provided, which engages into at least one continuous fold (6).

11. Airbag module according to at least one of the preceding claims, **characterized in that** the gas bag cover (19) has a portion (22) which, even after the opening of the gas bag cover (19) by the deploying gas bag, covers a part-region of the housing for accommodating the folded gas bag (5).

12. Airbag module according to at least one of the preceding claims, **characterized in that** the folded gas bag (5) is surrounded at least partially by a film (25) which can be torn open with increasing difficulty with an increasing distance from a tear-open seam.

## Revendications

1. Module d'airbag comprenant un générateur de gaz (3) avec un sac à gaz (5) et un recouvrement de sac (7, 12, 13, 19, 23) agencé sur le sac à gaz (5) et destiné à être ouvert par celui-ci lors de son déploiement, dans lequel après ouverture du recouvrement de sac après un instant prédéterminé des forces progressivement plus élevées sont nécessaires pour le déploiement du sac à gaz (5),
**caractérisé en ce que**
le générateur de gaz (3) est réalisé à plusieurs étages, le sac à gaz (5) repose, à l'état de repos dans la situation pliée, à côté du générateur de gaz (3) ou d'un diffuseur du générateur de gaz (3) et une seule couche du sac à gaz (5a) s'étend au-dessus de celui-ci, de sorte qu'après allumage du générateur de gaz, le sac à gaz (5) est tiré par les gaz sortant de ce générateur successivement hors du boîtier (2) du module d'airbag (1), et le recouvrement de sac et/ou une pièce (24) qui coiffe le sac à gaz replié (5) sont ainsi réalisés qu'après ouverture du recouvrement de sac (7, 12, 13, 19, 23) à partir d'un instant prédéterminé, des forces progressivement plus élevées sont nécessaires pour le déploiement du sac à gaz (5) et que dans ce cas les parties du sac à gaz (5) disposées à l'extérieur sont déployées uniquement sous des forces plus importantes.

2. Module d'airbag selon la revendication 1, **caractérisé en ce que** le recouvrement de sac (7, 12, 13, 23) est ainsi réalisé que son déchirement devient progressivement de plus en plus difficile à partir d'un emplacement prédéterminé.

3. Module d'airbag selon l'une ou de l'autre des revendications 1 et 2, **caractérisé en ce que** l'épaisseur du recouvrement de sac (12) est augmentée, au moins par tronçons, à partir d'un emplacement prédéterminé avec distance croissante depuis une couture déchirable.

4. Module d'airbag selon l'une au moins des revendications précédentes, **caractérisé en ce que** l'épaisseur du recouvrement de sac (12) augmente en continu en partant d'une couture déchirable.

5. Module d'airbag selon l'une au moins des revendications précédentes, **caractérisé en ce que** des entailles radiales (9) sont prévues à titre de lignes de déchirure, lesquelles présentent une profondeur décroissante en partant du milieu (8).

6. Module d'airbag selon l'une ou l'autre des revendications 1 et 2, **caractérisé en ce que**, en partant d'une région médiane (8), il est prévu des entailles (9) qui s'étendent au moins approximativement parallèlement et qui présentent une profondeur progressivement plus faible en partant de la région médiane (8).

7. Module d'airbag selon l'une au moins des revendications précédentes, **caractérisé en ce que** le recouvrement de sac (13) est pourvu d'au moins une nervure de renforcement (14) à partir d'un emplacement prédéterminé, laquelle présente une hauteur croissante par tronçons au moins avec distance croissante depuis une couture déchirable (15).

8. Module d'airbag selon la revendication 7, **caractérisé en ce que** la nervure de renforcement (14) présente une hauteur continûment croissante.

9. Module d'airbag selon l'une au moins des revendications précédentes, **caractérisé en ce que** le recouvrement de sac (23) comporte au moins un renforcement (24) qui s'engage dans un pli (6) du sac à gaz (5).

10. Module d'airbag selon la revendication 9, **caractérisé en ce qu'**il est prévu au moins un renforcement périphérique (24) qui s'engage dans au moins un pli périphérique (6).

11. Module d'airbag selon l'une au moins des revendications précédentes, **caractérisé en ce que** le recouvrement de sac (19) comprend un tronçon (22) qui, également après ouverture du recouvrement de sac (19) par le sac à gaz qui se déploie, recouvre une zone partielle du boîtier destinée au logement du sac à gaz replié (5).

12. Module d'airbag selon l'une au moins des revendications précédentes, **caractérisé en ce que** le sac à gaz replié (5) est entouré au moins partiellement par une feuille (25) qui est plus difficile à déchirer avec croissance de la distance depuis une couture déchirable.
